# EUROPEAN PATENT SPECIFICATION

(11) **EP 2 858 823 B1**
(45) Date of publication and mention of the grant of the patent: **12.08.2026**
(21) Application number: 13800433.8
(22) Date of filing: 07.06.2013
(51) Int. Cl.: D21H 27/10, D21H 19/80, D21H 19/40, D21H 19/60, B32B 27/10, B32B 27/20, B65D 77/04

(54) **A METHOD AND A SYSTEM FOR MANUFACTURING PACKAGING MATERIAL, AS WELL AS PACKAGING MATERIAL AND A PACKAGE**
VERFAHREN UND SYSTEM ZUR HERSTELLUNG VON VERPACKUNGSMATERIAL SOWIE VERPACKUNGSMATERIAL UND VERPACKUNG
PROCÉDÉ ET SYSTÈME DE FABRICATION D'UN MATÉRIAU D'EMBALLAGE, MATÉRIAU D'EMBALLAGE ET EMBALLAGE

(30) Priority: 08.06.2012 FI 20125631
(43) Date of publication of application: 15.04.2015
(73) Proprietor: UPM Specialty Papers Oy, 00100 Helsinki (FI); Walki Group Oy, 02170 Espoo (FI)
(72) Inventor: LEHMUSKALLIO, Timo, FI-00160 Helsinki (FI); KUNNAS, Leena, FI-53100 Lappeenranta (FI); TORKKOLA, Henri, FI-33950 Pirkkala (FI)
(74) Representative: Berggren Oy
(86) International application number: PCT/FI2013/050622
(87) International publication number: WO 2013/182757

(56) References cited:
- EP-A1- 0 603 876
- EP-A1- 2 077 238
- WO-A1-01/17771
- WO-A1-2009/005947
- WO-A1-2009/112255
- WO-A1-2010/042162
- WO-A1-2010/077203
- WO-A1-2011/110750
- WO-A1-94/28243
- WO-A1-96/31303
- WO-A1-96/31303
- JP-A- 2006 062 696
- JP-A- H04 334 448
- US-A- 5 736 204
- US-A1- 2012 114 917

## Description

### Field of the invention

The invention relates to a method, packaging material and a package as well as the use of the packaging material.

### Background of the invention

In industry, a large variety of packaging materials is manufactured, from which packages are made for products to be packaged. The properties and the desired shelf life of the products to be packaged typically determine the packaging material used for packaging each product.

The packaging materials may vary substantially between different products and also within the same product group. For example, bread can be packed in a plastic package, in which it keeps for a long time, or in a paper package, in which its crust remains crunchy. In industry, however, there is still need for new packaging materials and packages.

WO 2010/077203 discloses a biopolymer based coating composition for providing barrier coatings on cellulose based substrates. Biopolymer based barrier coating composition comprises a plasticizer, a nano-sized clay and a biopolymer comprising starch.

WO 2011/110750 discloses a heat-sealable biodegradable packaging material. The packaging material comprises a fibre substrate, an inner polymeric coating layer and an outer coating layer containing polylactide and a biodegradable polyester.

EP 2 077 238 discloses a laminated paper packaging material for containers keeping drinks or liquid food, and being excellent in oxygen-barrier performance. A laminated paper packaging material comprises a paper core layer, a barrier layer made of polyvinyl alcohol and a thermoplastic resin layer made of resin composition containing a plant-origin plastic.

WO 94/28243 discloses a cellulosic material coated with a coating comprising polyvinyl alcohol, non-spherical filler, a cross-linking agent and curing the coated material so as to form a cross-linked barrier layer onto the cellulosic material.

### Brief summary of the invention

It is an aim of this invention to present packaging material and a package.

Furthermore, it is an aim of this invention to present a method and a system for manufacturing packaging material.

Aspects of the invention are characterized by what is stated in the independent claims.

The present claim 1 defines the heat sealable packaging material according to the present invention.

In an advantageous solution according to the invention, the packaging material comprises
- base paper that comprises cellulose-containing natural fibres,
- a first coating on at least one side of the base paper, said first coating comprising one or more coating layers, and said first coating containing platy pigment and binding agent, preferably polyvinyl alcohol, and
- a second coating, said second coating comprising one or more coating layers that contain biopolymer.

Advantageously, in the solution according to the invention, the package contains packaging material, the packaging material comprising
- base paper that comprises cellulose-containing natural fibres,
- a first coating on at least one side of the base paper, said first coating comprising one or more coating layers, and said first coating containing platy pigment and binding agent, preferably polyvinyl alcohol, and
- a second coating, said second coating comprising one or more coating layers that contain biopolymer.

The current claim 12 defines the method for manufacturing packaging material according to the present invention.

In an example, a first coating is formed in a first coating unit. The coating unit for forming the first coating may consist of one or more coating devices. If at least two coating units are provided, at least one dryer can be placed between and/or after said at least two coating devices, for increasing the dry content of the material. The first coating unit can be in connection with a paper machine or in the same industrial plant as the paper machine. In other words, the paper preferably comprises the first coating before it is introduced into the system that comprises means for forming a second coating.

The total content of the first coating in the packaging material is 1 to 14 gsm, more advantageously 6 to 15 gsm and most advantageously 8 to 14 gsm The first coating comprises binding agent, preferably acrylate latex, styrene butadiene latex, styrene acrylate latex, and/or polyvinyl alcohol. Preferably, said binding agent comprises or consists of polyvinyl alcohol in such a way that the content of polyvinyl alcohol in the whole binding agent is advantageously at least 50% or at least 60%, more advantageously at least 70% or at least 80%, and most advantageously at least 90% or at least 99%.

The second coating unit for coating the paper that contains said first coating with one or more coatings that contain biopolymers as defined in the present claims 1 and 12, preferably comprises a lamination or extrusion process, preferably a coextrusion process.

Advantageously, the second coating comprises one, two, three, four, or five coating layers. The total content of the second coating is 5 to 50 gsm, advantageously 5 to 40 gsm or 8 to 30 gsm, and most advantageously 15 to 25 gsm.

The second coating comprises or consists of one or more renewable raw materials. Alternatively, the second coating comprises or consists of one or more synthetic raw materials. It is also possible that the second coating comprises one or more renewable raw materials and one or more synthetic raw materials.

The water vapour transmission rate of the packaging material that comprises the first and second coatings is 1 to 30 g/m²/day, more advantageously 2 to 20 g/m²/day, and most advantageously 8 to 15 g/m²/day. The packaging material is heat-sealable; preferably, the packaging material is both heat-sealable and compostable.

The first coating is on a different side of the base paper compared with the second coating. Preferably, the first coating is thus placed on the side of the outer surface of the package, and the second coating is placed on the side of the inner surface of the package.

The packaging material and the package according to the invention can be used for packaging, for example, food. In an advantageous example, the packaging material is used as an inner bag material in a cardboard box or a paperboard box to prevent the migration of mineral oil into the packaged product.

With the invention, several advantages can be obtained. The product according to the invention can be heat-sealable. Good protection from water vapour can be obtained with it. The product can also be printable by a printing technique according to the state of art. The packaging material according to the invention as well as the package according to the invention can be manufactured in an environmentally friendly way so that the packaging material and/or package can be, for example, recycled and/or composted and/or burnt after usage. Furthermore, the packaging material and/or the package according to the invention can be very suitable for use with foodstuffs.

### Description of the drawings

In the following, the invention will be described in more detail with reference to the appended drawings, in which:
- Figs. 1a-b: show examples of packaging material in cross-section,
- Fig. 2: shows a package according to an embodiment, and
- Figs. 3a-b: show reduced schematic charts of examples for manufacturing packaging material, wherein Fig. 3a shows the manufacture of packaging material from paper that comprises a first coating, and Fig. 3b shows the manufacture of paper that comprises first and second coatings in a continuous process.

### Detailed description of the invention

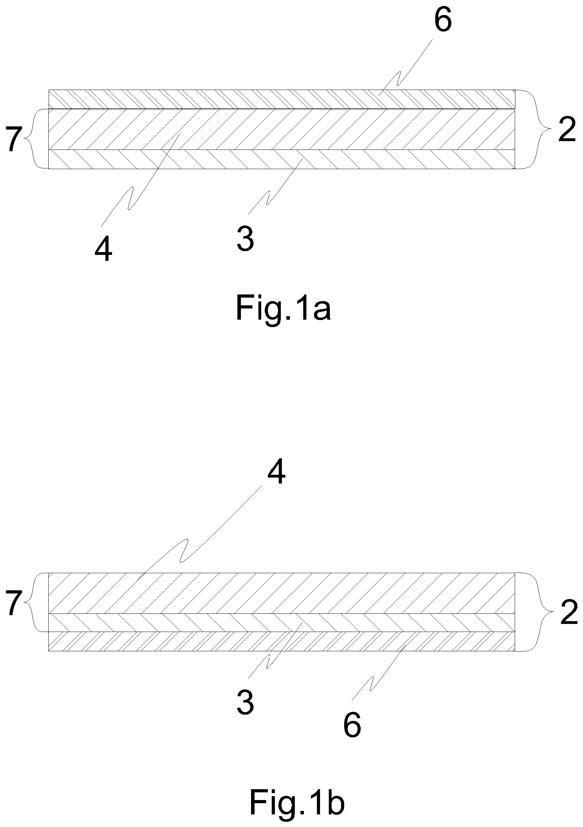

In this application, reference is made to Figs. 1 to 3, in which the following reference numerals are used:
- 1: package,
- 2: packaging material,
- 3: first coating that contains pigment and binding agent,
- 3a: raw materials for the coating that contains pigment and binding agent,
- 4: base paper,
- 4a: raw materials for the base paper,
- 5: section in a food package where no packaging material 2 according to the invention has been used.
- 6: second coating, i.e. coating that contains biopolymer,
- 6a: raw materials for the coating that contains biopolymer,
- 7: paper that comprises base paper and a coating that contains pigment and binding agent on at least one side of the base paper,
- 10: paper machine,
- 11: first coating unit, and
- 12: second coating unit.

In this application, all the contents (percentages) are in dry weight, unless otherwise expressed.

The term 'gsm' refers to grams per square meter (g/m²). Unless otherwise expressed, all the grammages are in dry weight.

The term 'RH' relates to relative humidity of the air.

The term 'PVA' refers to polyvinyl alcohol.

The term 'WVTR' refers to water vapour transmission rate, i.e. water vapour barrier at conditions of RH 50%, temperature 23°C. The water vapour transmission rate has been measured according to the standard ISO 2528:115 (valid in 2011).

The term 'KIT' refers to a determining method according to the Tappi standard (Tappi T559 cm02, valid in 2011) for paper and paperboard with oil and grease resistance.

The term 'Cobb' refers to the so-called Cobb value measured according to the standard ISO 535:1991 (valid in 2011).

'Air permeance' mentioned in the application has been measured according to the standard ISO 5636-5:2003 (valid in 2011).

The term 'first coating' refers to a coating that contains platy pigment and binding agent. The binding agent advantageously comprises acrylate latex, styrene butadiene latex, styrene acrylate latex, and/or polyvinyl alcohol (PVA). Advantageously, the binding agent comprises at least 60 wt% or at least 70 wt%, more advantageously at least 80 wt% or at least 90 wt%, and most advantageously at least 95 wt% of the above-mentioned substances, or consists of the above-mentioned substances. Preferably, the binding agent comprises at least 60 wt% or at least 70 wt%, more advantageously at least 80 wt% or at least 90 wt%, and most advantageously at least 95 wt% of polyvinyl alcohol, and/or consists of polyvinyl alcohol.

The term 'second coating' refers to a coating that contains biopolymer, the biopolymer being completely biodegradable and compostable polymer. The second coating is completely biodegradable and compostable.

The term 'platy coating pigment' refers to coating pigments present in platy form. The term 'platy' refers to a structure in which one dimension is substantially smaller than the two other dimensions of the structure. Advantageously, one dimension is at least 2 or 3 times smaller, more advantageously at least 5 or 10 times smaller, and most advantageously at least 20 times smaller than the other two dimensions of the structure. Advantageously, the platy coating pigment comprises talc, kaolin, and/or mica. In an advantageous example, the content of kaolin in the platy coating pigments used for the coating is at least 50 wt% or at least 60 wt%, more advantageously at least 70 wt% or at least 80 wt%, and most advantageously at least 90 wt%. The content of kaolin in the platy coating pigments to be used for the coating can be even at least 95 wt% or 100 wt%. The kaolin used can be mechanically processed, but preferably its properties have not been chemically modified.

The term 'base paper' 4 refers to paper that comprises cellulose-containing natural fibres, typically as its main raw material. Further, the base paper may comprise, for example, one or more fillers and/or additives. The base paper is preferably uncoated paper.

In an example, the base paper is so-called bag paper, such as so-called machine glazed (MG) paper. One side of MG paper is typically smoother than the other side of the paper. Advantageously, the base paper is fine paper, that is, paper that does not contain so-called mechanical pulp.

The term 'natural fibre' refers to any plant material that contains cellulose. The natural fibre may be of wood origin, and/or it may comprise other than wood-based natural fibres. The wood may be softwood, such as spruce, pine, silver fir, larch, Douglas fir, and/or Canadian hemlock; or hardwood, such as birch, aspen, poplar, alder, eucalyptus, and/or acacia; or a mixture of softwood and hardwood. Other than wood-based raw materials may include agricultural waste, grasses and/or other plant materials, such as straw, leaves, bark, seeds, legumes, flowers, tops, or fruit, which have been obtained from cotton, corn, wheat, oat, rye, barley, rice, flax, hemp, Manila hemp, sisal hemp, jute, ramee, kenaf hemp, bagasse, bamboo, and/or reed. Preferably, the natural fibre comprises chemically pulped natural fibre, that is, pulp made in a chemical pulping process. In an advantageous example, the content of chemically pulped natural fibres in all the natural fibres used in the base paper product is thus at least 70 wt%, at least 80 wt% or at least 90 wt%, advantageously at least 95 wt% or 98 wt%. Preferably, all the natural fibres used in the base paper are chemically pulped natural fibres. The diameter of the natural fibres is often 15 to 25 µm and the length more than 500 µm, but the present invention is not intended to be limited to these parameters.

The second coating 6 comprises one or more biopolymers, wherein the second coating 6 comprises at least one of:
- polylactic acid, i.e. polylactide,
- biopolyester,
- thermoplastic starch,
- a mixture of polylactide and biopolyester,
- a mixture of polylactide, biopolyester and talc,
   and/or
- polyhydroxyalkanoate, such as for example a mixture of polyhydroxybutyrate and valerate.

Advantageously, the above-mentioned substances constitute at least 50% or at least 60%, more advantageously at least 70% or at least 80%, and most advantageously at least 90% or at least 95% of the second coating 6.

Most advantageously, the second coating 6 comprises at least
- polylactide,
- biopolyester, or
- a mixture of polylactide and biopolyester.

Advantageously, the above-mentioned substances constitute at least 50% or at least 60%, more advantageously at least 70% or at least 80%, and most advantageously at least 90% or at least 95% of the second coating 6.

For improving the product properties, bioplastics can be blended with each other or compounded with each other in coextrusion coating. In an advantageous embodiment, at least two biopolymers are blended with each other before the second coating layer 6 is formed on at least one surface of the packaging material. Thus, it may be possible to improve the properties of the product made. Advantageously, the second coating layer 6 contains at least two biopolymers, or it consists of at least two biopolymers.

By the selection of at least one biopolymer and/or the number of layers comprising biopolymer used for the second coating, it is possible to influence, for example, one or more of the properties of the product mentioned below:
- water vapour transmission rate,
- oxygen transmission rate,
- adhesiveness,
- heat-sealability,
- friction,
- adherence to base web,
- grease resistance, and
- number of micropores.

Advantageously, the above-mentioned properties can be influenced by, for example, the following choices of biopolymer:
- water vapour transmission rate: polyhydroxyalkanoate (for example, mixture of polyhydroxybutyrate and valerate), polyvinyl alcohol,
- adhesiveness: because of their polarity, biopolymers are well adhered, except for polylactide
- friction: with the exception of polybutylene adipate terephthalate, the friction of the materials is typically low and they can be well used on, for example, packaging machines
- heat sealability: except for polyvinyl alcohols, the properties of heat sealability with themselves as well as paper are good
- adherence to base web: except for polyvinyl alcohol and polylactide, the adherence to base web is good
- grease resistance: best grease resistance is obtained with polylactide and polyvinyl alcohol
- number of micropores: for low numbers of micropores, it is possible to select, for example, modified starch, polyhydroxyalkanoate and polybutylene diapate terephthalate.

The water vapour transmission rate of the packaging material 2 is typically formed primarily by the effect of the base paper and the first coating 3, because biopolymers often have a relatively low water vapour barrier. Some water vapour transmission rates with given biopolymers are mentioned below. The water vapour transmission rate was defined at conditions of 23°C and RH 50%, with a polymer content of 20 gsm.
- polybutylene diapate terephthalate, water vapour transmission rate 120 to 150 g/m²/d,
- polylactide, water vapour transmission rate 50 to 80 g/m²/d,
- polyhydroxy alkanoate (for example, mixture of polyhydroxy butyrate and valerate), water vapour transmission rate 20 to 30 g/m²/d,
- polyvinyl alcohol, water vapour transmission rate 30 to 50 g/m²/d,
- modified starch, water vapour transmission rate 90 to 130 g/m²/d,
- biopolyester, water vapour transmission rate 50 to 70 g/m²/d, and
- mixture of polylactide and biopolyester, water vapour transmission rate 80 to 130 g/m²/d.

The packaging material 2 comprises base paper 4 which has been coated on one or both sides with a first coating 3 that contains platy pigment and binding agent; furthermore, said paper is coated on one or both sides with a second coating 6 that contains biopolymer.

The second coating 6 and said first coating 3 are provided on different sides of the base paper.

The grammage (dry weight) of the base paper 4 is advantageously at least 35 gsm, more advantageously at least 40 gsm and not greater than 65 gsm, for example about 50 gsm. Advantageously, the filler content of the base paper 4 is thus 5 to 25%, more advantageously 6 to 20% and most advantageously 8 to 15%. In an example, the grammage of the base paper is 70 to 300 gsm, more advantageously 110 to 250 gsm and most advantageously 150 to 200 gsm. Thus, the filler content of the base paper is advantageously 5 to 50%, more advantageously 8 to 25% and most advantageously 10 to 20%.

The first coating 3 is preferably mixed in water, that is, in the form of a so-called slurry, when it is applied as a coating onto the base paper 4. The grammage (dry weight) of the first coating 3 is preferably about 10 gsm, for example 8 to 15 gsm. If the first coating 3 consists of several coating layers, the grammage of a single coating layer is preferably 1 to 12 gsm, more preferably 3 to 5 gsm. In an example, the first coating 3 consists of two coating layers. Thus, the first coating layer with a grammage of preferably 1 to 6 gsm is preferably applied by film coating, and the second coating layer with a grammage of preferably 3 to 12 gsm is preferably applied by blade coating.

The grammage of the second coating 6 is advantageously 8 to 40 gsm, more advantageously 15 to 30 gsm. The grammage of a single layer of the second coating is advantageously from 2 to 40 gsm. The number of said single layers in the second coating layer is advantageously 1, 2, 3, 4, or 5, most advantageously 1, 2 or 3.

The grammage (dry weight) of the packaging material 2 which comprises base paper 4, the first coating 3 and the second coating 6, is advantageously 40 to 300 gsm, more advantageously 45 to 200 gsm and most advantageously 60 to 90 gsm.

In the first coating 3, the relative proportion of one or more platy coating pigments in the total content of said one or more platy coating pigments and binding agent, preferably polyvinyl alcohol, is at least 40 wt% (wherein the content of the binding agent is not higher than 60 wt% of the total content of said one or more platy coating pigments and the binding agent), more advantageously 45 to 80 wt% (wherein the content of the binding agent is 20 to 55 wt%), and even more advantageously 50 to 70 wt% (wherein the content of the binding agent is 30 to 50% of the total content of said one or more platy coating pigments and the binding agent).

The first coating 3 that contains pigment and binding agent, preferably polyvinyl alcohol, can be applied onto one side of the base paper 4, or it can be applied onto both sides of the base paper 4. The first coating 3 may comprise a single coating layer, or it may comprise several coating layers, such as two, three or four coating layers.

Advantageously, the first coating 3 that contains said platy pigment and polyvinyl alcohol, is used to provide a paper 7 coated with the first coating 3 and typically having excellent water vapour transmission rates (WVTR), and the second coating 6 that contains biopolymer is used, in turn, to provide good waterproofness, grease resistance and heat sealability.

By providing the paper 7 that comprises said first coating with said second coating 6 that contains biopolymer, a product can be produced which has good resistance to water vapour as well as good resistance to water. Furthermore, thanks to the biopolymer, the packaging material 2 to be made can be heat sealable, wherein the package can be, among other things, tightly sealed after the product to be packed has been placed in the package.

In an advantageous example, the content of the first coating 3 in the material 2 is at least 1 gsm and not higher than 7 gsm, more advantageously not higher than 6 gsm or 5 gsm. Thus, in an example, the water vapour transmission rate (WVTR, 23°C, RH 50%) of paper 7 that comprises the first coating is, before applying the second coating layer 6, 80 to 400 g/m²/day, for example 120 to 280 g/m²/day. In an example, the grease resistance of said paper 7, measured by the Oil Unger (60 s) method before applying the second coating layer 6, is thus 1.3 to 1.8, for example 1.4 to 1.6. In an example, the water resistance of the finished paper 7, measured by the Cobb (1800 s) test before applying the second coating layer 6, is thus 20 to 45, for example 22 to 30. In an example, the KIT value of such a material 7 before applying the second coating layer 6 is thus 1 to 2. In an advantageous example, the ratio between the platy coating pigment and PVA (pigment:PVA) in the first coating is thus between 50:50 and 70:30.

In an advantageous example, the content of the first coating 3 in the material 2 is 6 to 14 gsm, for example 8 to 12 gsm. In an example, the water vapour transmission rate (23°C, RH 50%) of the paper that comprises the first coating before applying the second coating layer 6 is thus 1 to 30 g/m²/day or 2 to 20 g/m²/day, more advantageously 3 to 15 g/m²/day or 4 to 12 g/m²/day, and most advantageously 5 to 10 or 6 to 8 g/m²/day. In an example, the grease resistance of said paper 7, measured by the Oil Unger (60 s) method before applying the second coating layer 6, is thus 0.3 to 1.3, more advantageously 0.3 to 0.7. In an example, the water resistance of said paper 7, measured by the Cobb (1800 s) test before applying the second coating layer 6, is thus 17 to 35, for example 18 to 25. In an example, the KIT value before applying the second coating layer 6 is thus 4 to 9, for example 5 to 8. In an advantageous example, the coating pigment to PVA ratio of the first coating 3 is formed so that the content of PVA is at least 40 wt% or at least 50 wt%.

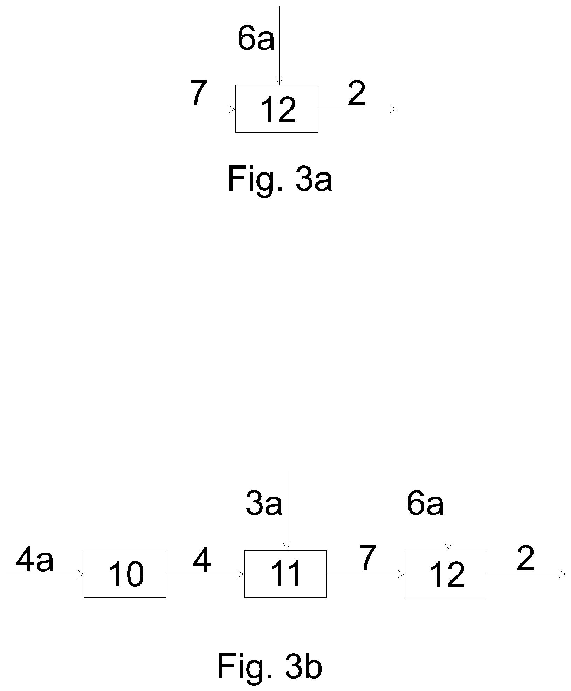

The base paper 4 according to the invention is advantageously made by a paper machine 10. The manufactured base paper 4 is suitably coated by a first coating unit 11 for applying the first coating 3. This is shown in Fig. 3b. The first coating unit 11 may comprise one or more coating devices. The coating of the base paper 4 by using the first coating unit 11 can be implemented by applying one or more solutions of the state of art, for example one or more of the following: blade coating, flooded nip application, nozzle application, short retention application, rod coating, air brush coating, film transfer coating, curtain coating, or spray coating. At least one dryer unit can be provided between two successive coating devices and/or coating units, for reducing the moisture content of the material. In an advantageous example, at least one coating is formed by film transfer coating, rod coating, or blade coating.

In the package 1, the second coating 6 is placed preferably inside the package. Preferably, the second coating 6 that contains one or more biopolymers, is applied onto paper 7 that comprises the coating 3. After the coating with plastic, the water vapour resistance and the grease resistance of the product 1 are further improved, depending on the polymer structure. Thanks to the polymer coating, the product can also be heat sealed.

The second coating 6 that contains one or more biopolymers advantageously contains at least 2 gsm of said one or more biopolymers, more advantageously at least 8 gsm of said one or more biopolymers. Advantageously, the second coating 6 comprises a total of at least 40 wt% or at least 50 wt%, more advantageously at least 60 wt% or at least 70 wt%, and most advantageously at least 80 wt% or at least 90 wt% of biopolymers.

Figure 3a shows a reduced schematic view of the manufacture of packaging material 2 by using coated paper 7 and one or more biopolymers. The second coating 6 that contains at least one biopolymer is advantageously applied onto at least one surface of the product to be made, by using extrusion technique, preferably coextrusion technique. In extrusion, preferably one or more of the above-mentioned biopolymers are used. For example in coextrusion, plastics are preferably used, which adhere to each other in molten state and whose rheological properties are mutually compatible. By means of a coextrusion structure, various product properties can be improved, such as water vapour resistance and/or sealability and/or adherence to base web, and/or running properties. The second coating 6 can be applied in a coating step 12, for example by extrusion technique and/or coextrusion technique and/or extrusion lamination technique, and/or coextrusion lamination technique. Preferably, the coextrusion coating technique is applied.

Extrusion techniques relate to extruding plastic granulates and possible and possible auxiliary agents through an extruder according to a given profile. In extrusion, a biopolymer in solid state is converted to molten state under compression pressure. The aim of the extrusion is to produce a thin molten film as uniformly as possible and in a controlled manner onto the surface of a running material.

In an example, an extruder is used in the invention, the extruder comprising a motor, a gearbox, a granulate funnel or a corresponding arrangement, i.e. a so-called hopper, a screw, a cylinder encircling the screw, a cooling water channel for the screw, a resistance heating element, a cooling fan, a filter pack, an adapter, a breaker plate, a counterbalance valve, and a nozzle. Thus, the function of the hopper is to feed plastic granulates to the extruder. The plastic granulates are transferred to the hopper either automatically or manually from bags, containers, or storage silos. A weighing unit can be included in the transfer of the plastic, for controlling the feeding of plastic into the hopper. Various plastics can be added into the hopper for producing various plastic mixtures. For the mixing, it is possible to apply, for example, dispensing of plastic on the basis of weight or on the basis of volume. The consumption of plastic is adjusted by the rotation speed of the screw, affecting the operation of the hopper.

The function of the extrusion screw is preferably to bring the plastic granulates to a homogeneous molten state. Said screw advantageously consists of a feeding zone, a compressing zone, and a homogenization zone, in which the transformation of plastic towards a homogeneous structure takes place. In the feeding zone, the free space between the cylinder and the screw is filled with granulates. As the screw rotates, the granulates move towards the compressing zone, in which primarily the friction between the granulates and the pressure of the plastic mass start to bring the polymer into a molten state. In the homogenization zone, the temperature of the plastic mass and the structure of the plastic are adjusted by means of resistance heating elements and cooling. Bringing the plastic into a homogeneous state can be influenced, for example, by taking into account and adjusting the temperature settings in the cylinder zones, the rotation speed of the screw, counterpressure, an adapter, and/or the temperature settings of the nozzle of the extruder.

After the screw, the molten plastic flows advantageously through a breaker plate and a filter pack towards the adapter. The functions of the breaker plate and the filter pack are to create a counterpressure to increase the homogeneity of the plastic and to remove impurities, such as rocks and metal splinters, from the polymer. Downstream of the unit formed by the breaker plate and the filter pack, the polymer flows advantageously into the adapter, whose function is to adjust pressure variations and simultaneously to create a counterpressure by means of a counterbalance valve.

The nozzle of the extruder drives the molten plastic into a wide film. The final temperature, thickness and width of the plastic are adjusted by the nozzle. For example, so-called necking can be prevented by making the edge of the film thinner.

In coextrusion, different layers of plastic are combined by means of multiple extrusion screws. In an example, two or more screws are used, producing one to four different combinations of plastic. For example, the rotation speeds of the screws can be used to adjust the thickness of each layer of plastic. Coextrusion can be applied to give the product desired properties, such as surface friction, gloss, or colour. For successful coextrusion, one should typically take into account the compatibility of the plastics used, so that the different layers would keep the required level of adhesion and the thickness of the plastic layers would not vary too much.

In the invention, it is also possible to apply an extrusion and/or coextrusion device according to the state of art, different from the extrusion device described above.

It is also possible to apply the second coating 6 by, for example, an extrusion lamination technique or a coextrusion lamination technique. Lamination is a process in which a plastic film is supplied between two raw materials in web form in a nip formed by two rolls. In the nip formed by the rolls, the raw materials are pressed together in such a way that a desired adhesion is provided between the material layers.

Advantageously, the process parameters applied in controlling the device 12 according to the invention comprise one or more of the following:
- temperature of the molten plastic, for influencing the adhesion and the oxygenation as well as the viscosity of the plastic,
- web speed, for influencing the productivity and the adhesion as well as the rheological behaviour of the plastic,
- rotation speed of the extruder, for influencing the rheological properties of the plastic,
- an air gap, for influencing the oxygenation/cooling and thereby the adhesion of the plastic,
- pre-treatment of the web, which may comprise, for example, electric or flame corona treatment or priming, for affecting the oxygenation of the base web and thereby the adhesion,
- nip pressure, for influencing how tightly the polymer is pressed against the base web and thereby influencing the adhesion and the number of micropores,
- pressure of the molten plastic, for affecting the homogeneity and the temperature of the molten plastic, and/or
- temperature of the cooling roll, for affecting the adherence of the plastic to the roll, the adhesion, and in some cases also the crystallinity of the plastic.

The first coating 3 according to the invention always comprises platy coating pigment and binding agent, preferably polyvinyl alcohol, but it can also comprise other agents. In an advantageous example, the total content of the platy coating pigment and the binding agent, preferably polyvinyl alcohol, in the first coating layer 3 (calculated as dry substance) is at least 70 wt% or at least 75 wt%, more advantageously at least 80 wt% or at least 85 wt%, and most advantageously at least 90 wt% or at least 95 wt%. Preferably, the first coating 3 consists totally or substantially totally of one or more platy coating pigments and one or more binding agents, preferably polyvinyl alcohol.

The second coating 6 according to the invention always contains at least one biopolymer, but it may also contain other agents. In an advantageous example, the second coating comprises, for example, talc and/or calcium carbonate. In an example, the total content of talc and calcium carbonate is 20 to 50 wt%, for example 30 to 40 wt%. The second coating can also contain other agents, for example additives. Advantageously, the total content of biopolymer(s) in the second coating is at least 40% or at least 50%, more advantageously at least 60% or at least 70%, and most advantageously at least 80% or at least 90%.

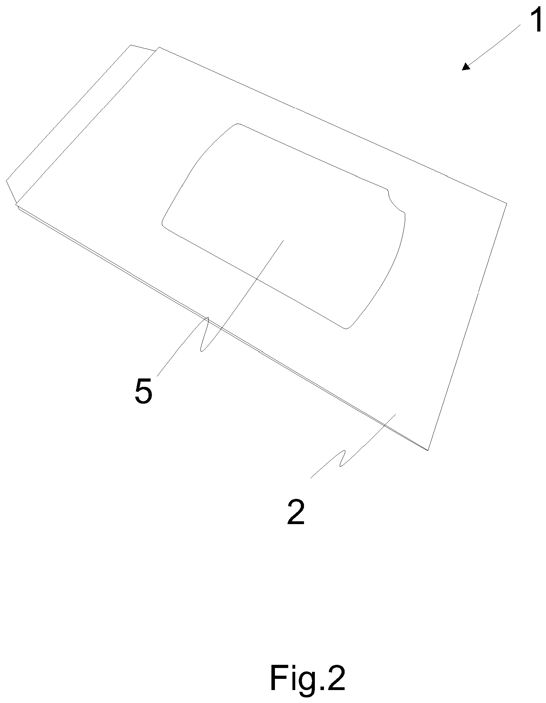

In an advantageous embodiment, the packaging material 2 according to the invention is used for forming a food package 1. In an advantageous example, the food package 1 is a bag or has a substantially bag-like shape. The food package 1 can also comprise one or more other materials 5 than the material 2 according to the invention, for example in the form of a so-called "window" (Fig. 2). However, even in such a case, the content of the packaging material 2 according to the invention is at least 50%, more advantageously at least 60% or at least 70%, and most advantageously at least 80% or at least 90% of the surface area of the outer layer of said food package 1.

In an example, the packaging material 2 is used for packaging fresh bread. In another example, the packaging material 2 is used for packaging dry products, such as dried bread and/or crispbread. The packaging material 2 having one or more of the above listed properties may be suitable for the packaging of bakery products, such as, for example, greasy and dry foodstuffs and/or greasy and moist foodstuffs. Such foodstuffs may include, for example, hamburgers or pastries.

In an advantageous example, the solution according to the invention is used for the packaging of flour, dry food, cereals, muesli, bakery products, meat, sugar, salt, pepper, animal feed, spices, dry soups, coffee, cocoa, biscuits, snacks, tea, pasta, detergent, and/or rice.

### Example 1

A series of test runs was carried out to examine the properties of different packaging materials. The samples were:
1. Uncoated food paper.
2. Paper according to point 1, further coated with polyethylene.
3. Paper according to point 1, further comprising the "first coating" according to the invention having in this case polyvinyl alcohol as binding agent.
4. Paper according to point 1, further comprising the "second coating" according to the invention comprising in this case biodegradable polymer.
5. Paper according to point 1, further comprising the first coating according to point 3 and the second coating according to point 4.

The results are shown in Table 1. As seen in Table 1, the sample according to the invention (sample 5) could provide a heat-sealable and biodegradable product with high grease resistance and good water vapour barrier.

**Table 1: Properties of different samples.**

| Sample | water vapour barrier | heat sealability | grease resistance | biodegradeability |
|---|---|---|---|---|
| 1 | very low (WVTR 250) | no | very low | ok |
| 2 | high (WVTR 5) | ok | moderate | no |
| 3 | high (WVTR 10) | no | low | ok |
| 4 | low (WVTR 150) | ok | high | ok |
| 5 | high (WVTR 10) | ok | high | ok |

### Example 2

Materials 2 according to the invention were made. In this example, the first coating comprised kaolin and polyvinyl alcohol, and the biopolymer of the second coating varied as shown in Table 2. Furthermore, reference samples were made, from which the first coating 3 was totally missing.

Water vapour transmission rate was then compared between said different second coating layers and two different base papers: uncoated base paper and base paper with a first coating containing kaolin and polyvinyl alcohol. As can be seen from Table 2, thanks to the first coating the water vapour transmission rate was significantly better than for paper that only contained the second coating.

Furthermore, heat sealability and grease resistance were measured for a base paper with a first coating containing kaolin and polyvinyl alcohol. These values are also seen in Table 2.

**Table 2. Properties of material**

| Property | water vapour transmission | | heat sealability | grease resistance |
|---|---|---|---|---|
| test method | WVTR (23°C, 50 RH) 20 gsm | | plastic / plastic, (1 s 3 bar) | ASTM F 119, 40°C, olive oil |
| Base paper: | Sample 1 | Sample 2 | Sample 2 | Sample 2 |
| Sample 1: regular | | | | |
| Sample 2: regular + first coating 3 | | | | |
| unit | g/m²d | g/m²d | C | h |
| | | | | |

| **Second coating** | | | | |
|---|---|---|---|---|
| modified starch | 90 | 15 | 137 | <72 |
| polylactide | 75 | 20 | 135 | >168 |
| mixture of starch and polycaprolactone, | 125 | 20 | 138 | <72 |
| polybutylene succinate | 125 | 15 | 138 | na |
| mixture of polylactide and biopolyester | 125 | 20 | 133 | <72 |
| polyhydroxy alkanoate | 20 | 10 | na | <72 |
| polybutylene adipate terephthalate | 150 | 15 | 134 | na |
| polybutylene adipate terephthalate 10 gsm / polylactide 10 gsm | 110 | 20 | 137 | >168 |
| mixture of polylactide and biopolyester 10 gsm / polylactide 10 gsm | 110 | 30 | 132 | >168 |
| polylactide 10 gsm / modified starch 10 gsm | 110 | 20 | 133 | na |
| polybutylene adipate terephthalate 10 gsm / modified starch 10 gsm | 140 | 20 | 132 | <72 |

The invention is not limited solely to the examples presented in Figs. 1 to 3 and the above description, but it may be modified within the scope of the appended claims. In addition to the above mentioned materials, the product can also contain, for example, protective lacquer on the surface of the product and/or between the material layers.

The packaging material according to the invention, consisting of base paper, the first coating and the second coating, is at least partly biodegradable or compostable. Advantageously, the packaging material is at least partly both biodegradable and compostable. The packaging material can be completely (100%) biodegradable and compostable within 6 months, advantageously within 4 months, most advantageously within 2 months or in a time shorter than this. The packaging material according to the invention can be at least 90%, at least 95% or at least 98%, advantageously at least 99% biodegradable and compostable. For example under aerobic conditions, such as in a compost, the packaging material is advantageously disintegrated by at least 90% in six months. In other words, at least 90% of the packaging material is disintegrated under aerobic conditions, for example in a compost, to carbon dioxide, water and biomass in such a way that the disintegration products have no ecotoxic effects. The biodegradability and compostability of the packaging material and the package can be determined, for example, according to the standard SFS-EN 13432 adopted on 12 March 2001. Chemically unmodified constituents of natural origin, such as wood, wood fibre, starch, paper mass, can be considered biodegradable materials without testing.

Complete (100%) biodegradability refers to the disintegration of an organic chemical compound by means of microorganisms in the presence of oxygen to carbon dioxide, water, and mineral salts of the elements present, as well as biomass. Requirements for the complete compostability of a package, a package part, and packaging material are complete biodegradability and the fact that the disintegration products have no unfavourable effect on the quality of the compost. For example, the disintegration products have no ecotoxic effects. The germinability of a plant species grown in a compost that contains disintegrated packaging material is advantageously higher than 90% compared with a compost with no disintegration products of said packaging material.

In an example, the polyvinyl alcohol (PVA) used in the packaging material is made of polyvinyl acetate that has been hydrolyzed more than 70%. Advantageously, the polyvinyl acetate is completely (100%) hydrolyzed. The PVA with a degree of hydrolysis of 70% or more is at least partly biodegradable. Thus, at least part of the PVA is disintegrated by microorganisms, via intermediate steps, to acetic acid and further to water and carbon dioxide. Measured according to the standards ISO 14851 and ASTM D427101 (in an oxygen-rich aqueous phase, at the temperature of 21°C), at least 20% of the PVA is disintegrated in 56 days. In an example, PVA is used as the binding agent in the first coating layer of the base paper for the packaging material.

In an example, the packaging material contains more than 50%, advantageously more than 70%, most advantageously more than 90% of volatile solids. The content of volatile solids in the packaging material can be, for example, 50 to 100%, 60 to 99%, or 70 to 95%. Volatile solids refer to the quantity of solid substances, which is obtained by subtracting the residue that is left by burning a known quantity of the material to be tested at about 550°C, from the total dry content of the same sample. The total dry content is obtained by drying the material to be tested at 105°C in such a way that the weight of the material to be tested is constant (the weight no longer changes). In an example, the content of volatile solids in the second coating that only consists of biodegradable polymer or a biodegradable polymer blend, can be 95 to 100%, advantageously 98 to 100%.

In an example, the second coating of the packaging material is completely biodegradable and compostable. Thus, the second coating only consists of completely biodegradable and compostable raw materials, such as one or more biopolymers (biopolymer blend). For example, the second coating advantageously consists of one, two, three, four, five, or six biopolymers, more advantageously one, two, or three biopolymers. In addition, the second coating can contain other biodegradable and compostable raw materials, such as biodegradable auxiliary agents or additives.

In an example, the second coating contains at least 50% or at least 60%, more advantageously at least 70% or at least 80%, and most advantageously at least 90% or at least 95% of biopolymer or a biopolymer blend. Furthermore, the second coating can contain inert raw materials, such as talc, calcium carbonate, titanium dioxide, and/or carbon black. The content of the inert raw materials can be, for example, not higher than 10%, advantageously lower than 5%, more advantageously lower than 2%.

According to the invention, the second coating 6 can comprise one or more biopolymers, advantageously one, two, three, four, five, or six biopolymers, more advantageously one, two, or three biopolymers. Advantageously, the second coating 6 contains:
- polylactic acid, i.e. polylactide PLA, PLLA, PDLA, PDLLA,
- polycaprolactone PCL,
- a mixture of starch and polycaprolactone,
- polyester amide PEA,
- polyhydroxyalkanoate PHA,
- polyhydroxybutyrate PHB,
- polyhydroxybutyrate/valerate,
- polyhydroxybutyrate-co-polyhydroxyhexanoate PHBH,
- aliphatic polylactic acid copolymer CPLA,
-
- starch-based starch/biopolymer blends, for example PSM (plastic starch material) and TPS (thermoplastic starch), which advantageously comprise at least 10 wt% and not more than 90 wt% of starch,
-
- a mixture of polylactide and biopolyester,
- a mixture of polylactide and biopolyester and talc,
- a mixture of polyhydroxyalkanoate and biopolyester, and/or
-

Of the above-mentioned biopolymers, biopolyester can refer to, for example, aliphatic aromatic copolyester (AAC).

The layers of the second coating can also consist of mixtures of the above-mentioned alternatives. Advantageously, the above-mentioned substances constitute at least 50% or at least 60%, more advantageously at least 70% or at least 80%, and most advantageously at least 90% or at least 95% of the second coating 6.

More advantageously, the second coating 6 comprises at least
- polylactic acid, i.e. polylactide,
- aliphatic aromatic co-polyester,
- thermoplastic starch (TPS),
- a mixture of polylactide and aliphatic aromatic copolyester,
- a mixture of polylactide, aliphatic aromatic copolyester, and talc, and/or
- polyhydroxyalkanoate, such as for example a mixture of polyhydroxybutyrate and valerate.

Advantageously, the above-mentioned substances constitute at least 50% or at least 60%, more advantageously at least 70% or at least 80%, and most advantageously at least 90% or at least 95% of the second coating 6.

Most advantageously, the second coating 6 comprises at least
- polylactide,
- aliphatic aromatic co-polyester, or
- a mixture of polylactide and aliphatic aromatic copolyester.

Advantageously, the above-mentioned substances constitute at least 50% or at least 60%, more advantageously at least 70% or at least 80%, and most advantageously at least 90% or at least 95% of the second coating 6.

According to the invention, the density of the second coating can be, for example, between 1.05 and 1.35, advantageously between 1.15 and 1.3, or most advantageously between 1.15 and 1.27.

The packaging material according to the invention is heat sealable. In particular, at least the second coating 6 of the packaging material is heat sealable. The second coating layer is heat sealable, for example, under the following conditions: at a temperature between 130 and 180°C or between 140 and 180°C, and under a pressure of 3 bar. The second coating layer can be heat sealed, for example, with another similar layer. Alternatively, the second coating layer can be heat sealed with the base paper or with the first coating.

## Claims

1. A heat sealable packaging material having a water vapour transmission rate of 1 to 30 g/m²/day comprising
- base paper (4) that contains cellulose-containing natural fibres,
- a first coating (3) on at least one surface of the base paper (4), comprising at least one platy pigment and binding agent
in which the relative proportion of the platy pigment(s) in the total content of the platy pigment(s) and the binding agent is at least 40 wt.% and not more than 80 wt.%,
a total content of the first coating in the packaging material (2) is 1 to 14 gsm, and
the first coating comprises a binding agent selected from:
acrylate latex, styrene butadiene latex, styrene acrylate latex, and polyvinyl alcohol, and
- a second coating (6) comprising at least one biopolymer, wherein the second coating (6) comprises at least one of:
- polylactic acid,
- biopolyester,
- mixture of polylactide and biopolyester,
- mixture of polylactide, biopolyester and talc,
- thermoplastic starch,
- polyhydroxyalkanoate, and
- mixture of polyhydroxybutyrate and valerate,
a total content of the second coating being 5 to 50 gsm,
the second coating layer being heat sealable at a temperature between 140 and 180°C, under a pressure of 3 bars,
wherein the second coating (6) and the first coating (3) are provided on different sides of the base paper (4),
the packaging material is heat sealable, and
the packaging material has a water vapour transmission rate of 1 to 30 g/m²/day measured at conditions of **RH** 50%, temperature 23°C, according to the standard ISO 2528:115 (valid in 2011).

2. The packaging material according to claim 1, in which the second coating (6) is formed by extrusion technique, coextrusion technique, extrusion lamination technique, or coextrusion lamination technique.

3. The packaging material according to claim 1 or 2, in which the binding agent comprises the polyvinyl alcohol.

4. The packaging material according to any of the preceding claims, in which the second coating (6) comprises 1 to 5 bioplastic layers.

5. The packaging material according to any of the preceding claims, in which the second coating (6) is heat sealable in the temperature range from 130 to 180°C.

6. The packaging material according to any of the preceding claims, which is at least 90% biodegradable in 6 months, measured according to the standard SFSEN 13432.

7. The packaging material according to any of the preceding claims, in which said at least one biopolymer comprises one or more renewable raw materials.

8. The packaging material according to any of the preceding claims, in which said at least one biopolymer comprises one or more synthetic raw materials.

9. The packaging material according to any of the preceding claims, in which the total content of the first coating (3) is 6 to 14 gsm.

10. A package that contains packaging material according to any of the claims 1 to 9.

11. The package according to claim 10, in which the first coating (3) is placed in connection with the outer surface of the package, and the second coating (6) is placed in connection with the inner surface of the package.

12. A method for manufacturing packaging material, the packaging material being heat sealable and having a water vapour transmission rate of 1 to 30 g/m²/day measured according to ISO 2528:115 (valid in 2011), at conditions of **RH** 50% and temperature 23°C, the method comprising
- supplying paper (7) into a system, the paper comprising
- base paper (4) that contains cellulose-containing natural fibres, and
- a first coating (3) that contains platy pigment and binding agent, wherein the relative proportion of the platy pigment(s) in the total content of the platy pigment(s) and the binding agent is at least 40 wt.%, and not more than 80 wt.%, the total content of the first coating in the packaging material (2) being 1 to 14 gsm, wherein the first coating comprises a binding agent selected from:
acrylate latex, styrene butadiene latex, styrene acrylate latex, and polyvinyl alcohol, and
- coating said paper (7) with a coating (6) that contains biopolymer,
wherein said coating (6) that contains biopolymer comprises at least one of:
- polylactic acid,
- biopolyester,
- mixture of polylactide and biopolyester,
- mixture of polylactide, biopolyester and talc,
- thermoplastic starch,
- polyhydroxyalkanoate, and
- mixture of polyhydroxybutyrate and valerate,
a total content of the coating being 5 to 50 gsm, for manufacturing the packaging material (2), by extrusion technique, coextrusion technique, extrusion lamination technique, or coextrusion lamination technique so that said coating (6) that contains biopolymer and the first coating (3) are on different sides of the base paper,
wherein the second coating layer is heat sealable at a temperature between 140 and 180°C, under a pressure of 3 bars.

13. The use of packaging material according to any of the preceding claims 1 to 9 as a food package or a part of it.

14. The use of packaging material according to any of the preceding claims 1 to 9 as inner bag material in a cardboard box or a paperboard box to prevent the migration of mineral oil into a packaged product.

## Patentansprüche

1. Ein heißsiegelbares Verpackungsmaterial mit einer Wasserdampfdurchlässigkeit von 1 bis 30 g/m²/Tag, umfassend
- Grundpapier (4), das zellulosehaltige Naturfasern enthält,
- eine erste Beschichtung (3) auf mindestens einer Oberfläche des Grundpapiers (4), umfassend mindestens ein plattenförmiges Pigment und ein Bindemittel
wobei der relative Anteil des/der plattenförmigen Pigmente(s) am Gesamtgehalt des/der plattenförmigen Pigmente(s) und des Bindemittels mindestens 40 Gew.-% und höchstens 80 Gew.-% beträgt,
der Gesamtgehalt der ersten Beschichtung im Verpackungsmaterial (2) 1 bis 14 gsm beträgt, und
die erste Beschichtung ein Bindemittel umfasst, das ausgewählt ist aus:
Acrylatlatex, Styrol-Butadien-Latex, Styrol-AcrylatLatex und Polyvinylalkohol, und
- eine zweite Beschichtung (6), umfassend mindestens ein Biopolymer, wobei die zweite Beschichtung (6) mindestens eines der folgenden Elemente umfasst:
- Polymilchsäure,
- Biopolyester,
- Mischung aus Polylactid und Biopolyester,
- Mischung aus Polylactid, Biopolyester und Talkum,
- thermoplastische Stärke,
- Polyhydroxyalkanoat, und
- Mischung aus Polyhydroxybutyrat und Valerat,
ein Gesamtgehalt der zweiten Beschichtung 5 bis 50 gsm, die zweite Beschichtungsschicht bei einer Temperatur zwischen 140 und 180 °C unter einem Druck von 3 bar heißsiegelbar ist,
wobei die zweite Beschichtung (6) und die erste Beschichtung (3) auf unterschiedlichen Seiten des Grundpapiers (4) bereitgestellt sind,
das Verpackungsmaterial heißsiegelbar ist, und
das Verpackungsmaterial eine Wasserdampfdurchlässigkeit von 1 bis 30 g/m²/Tag aufweist, gemessen bei einer relativen Luftfeuchtigkeit von 50 % und einer Temperatur von 23 °C gemäß der Norm ISO 2528:115 (gültig im Jahr 2011).

2. Verpackungsmaterial nach Anspruch 1, wobei die zweite Beschichtung (6) durch Extrusionsverfahren, Coextrusionsverfahren, Extrusionslaminierungsverfahren oder Coextrusionslaminierungsverfahren hergestellt ist.

3. Verpackungsmaterial nach Anspruch 1 oder 2, wobei das Bindemittel Polyvinylalkohol umfasst.

4. Verpackungsmaterial nach einem der vorstehenden Ansprüche, wobei die zweite Beschichtung (6) 1 bis 5 Schichten aus Biokunststoff umfasst.

5. Verpackungsmaterial nach einem der vorstehenden Ansprüche, wobei die zweite Beschichtung (6) im Temperaturbereich von 130 bis 180 °C heißsiegelbar ist.

6. Verpackungsmaterial nach einem der vorstehenden Ansprüche, das innerhalb von 6 Monaten zu mindestens 90 % biologisch abbaubar ist, gemessen gemäß der Norm SFSEN 13432.

7. Verpackungsmaterial nach einem der vorstehenden Ansprüche, wobei das mindestens eine Biopolymer einen oder mehrere erneuerbare Rohstoffe umfasst.

8. Verpackungsmaterial nach einem der vorstehenden Ansprüche, wobei das mindestens eine Biopolymer einen oder mehrere synthetische Rohstoffe umfasst.

9. Verpackungsmaterial nach einem der vorstehenden Ansprüche, bei dem der Gesamtgehalt der ersten Beschichtung (3) 6 bis 14 gsm beträgt.

10. Verpackung, die Verpackungsmaterial nach einem der Ansprüche 1 bis 9 enthält.

11. Verpackung nach Anspruch 10, wobei die erste Beschichtung (3) an der Außenfläche der Verpackung und die zweite Beschichtung (6) an der Innenfläche der Verpackung angebracht ist.

12. Verfahren zum Herstellen von Verpackungsmaterial, wobei das Verpackungsmaterial heißsiegelbar ist und eine Wasserdampfdurchlässigkeit von 1 bis 30 g/m²/Tag aufweist, gemessen gemäß ISO 2528:115 (gültig im Jahr 2011) bei einer relativen Luftfeuchtigkeit von 50 % und einer Temperatur von 23 °C, das Verfahren umfassend
- Zuführen von Papier (7) in ein System, das Papier umfassend
- Grundpapier (4), das zellulosehaltige Naturfasern enthält, und
- eine erste Beschichtung (3), die plattenförmiges Pigment und Bindemittel enthält, wobei der relative Anteil des/der plattenförmigen Pigmente(s) am Gesamtgehalt des/der plattenförmigen Pigmente(s) und des Bindemittels mindestens 40 Gew.-% und höchstens 80 Gew.-% beträgt, wobei der Gesamtgehalt der ersten Beschichtung im Verpackungsmaterial (2) 1 bis 14 gsm beträgt, wobei die erste Beschichtung ein Bindemittel umfasst, das ausgewählt ist aus:
Acrylatlatex, Styrol-Butadien-Latex, Styrol-AcrylatLatex und Polyvinylalkohol, und
- Beschichten des Papiers (7) mit einer Beschichtung (6), die ein Biopolymer enthält, wobei die Biopolymer enthaltende Beschichtung (6) mindestens eines der folgenden Elemente umfasst:
- Polymilchsäure,
- Biopolyester,
- Mischung aus Polylactid und Biopolyester,
- Mischung aus Polylactid, Biopolyester und Talkum,
- thermoplastische Stärke,
- Polyhydroxyalkanoat, und
- Mischung aus Polyhydroxybutyrat und Valerat,
einen Gesamtgehalt der Beschichtung 5 bis 50 gsm, zum Herstellen des Verpackungsmaterials (2) mittels Extrusionsverfahren, Coextrusionsverfahren, Extrusionslaminierungsverfahren oder Coextrusionslaminierungsverfahren, sodass sich die Biopolymer enthaltende Beschichtung (6) und die erste Beschichtung (3) auf unterschiedlichen Seiten des Grundpapiers befinden,
wobei die zweite Beschichtungsschicht bei einer Temperatur zwischen 140 und 180 °C unter einem Druck von 3 bar heißsiegelbar ist.

13. Verwendung von Verpackungsmaterial nach einem der vorstehenden Ansprüche 1 bis 9 als Lebensmittelverpackung oder als Teil davon.

14. Verwendung von Verpackungsmaterial nach einem der vorstehenden Ansprüche 1 bis 9 als Innenbeutelmaterial in einem Karton oder einer Pappschachtel, um die Migration von Mineralöl in ein verpacktes Produkt zu verhindern.

## Revendications

1. Matériau d'emballage thermoscellable ayant un taux de transmission de vapeur d'eau de 1 à 30 g/m²/jour, comprenant
- un papier de base (4) qui contient des fibres naturelles contenant de la cellulose,
- un premier revêtement (3) sur au moins une surface du papier de base (4), comprenant au moins un pigment lamellaire et un agent de liaison
dans lequel la proportion relative du ou des pigments lamellaires dans la teneur totale du ou des pigments lamellaires et de l'agent de liaison est d'au moins 40 % en poids et ne dépasse pas 80 % en poids,
une teneur totale du premier revêtement dans le matériau d'emballage (2) est de 1 à 14 gsm, et
le premier revêtement comprend un agent de liaison sélectionné parmi :
le latex d'acrylate, le latex de styrène-butadiène, le latex de styrène-acrylate et l'alcool polyvinylique, et
- un second revêtement (6) comprenant au moins un biopolymère, dans lequel le second revêtement (6) comprend au moins l'un parmi :
- l'acide polylactique,
- le biopolyester,
- un mélange de polylactide et de biopolyester,
- un mélange de polylactide, de biopolyester et de talc,
- l'amidon thermoplastique,
- le polyhydroxyalcanoate, et
- un mélange de polyhydroxybutyrate et de valérate, une teneur totale du second revêtement étant de 5 à 50 gsm,
la seconde couche de revêtement étant thermoscellable à une température comprise entre 140 et 180 °C, sous une pression de 3 bars,
dans lequel le second revêtement (6) et le premier revêtement (3) sont prévus sur différents côtés du papier de base (4),
le matériau d'emballage est thermoscellable, et
le matériau d'emballage a un taux de transmission de vapeur d'eau de 1 à 30 g/m²/jour mesuré dans des conditions d'humidité relative de 50 %, une température de 23 °C, selon la norme ISO 2528:115 (en vigueur en 2011).

2. Matériau d'emballage selon la revendication 1, dans lequel le second revêtement (6) est formé par technique d'extrusion, technique de coextrusion, technique de laminage par extrusion ou technique de laminage par coextrusion.

3. Matériau d'emballage selon la revendication 1 ou 2, dans lequel l'agent de liaison comprend de l'alcool polyvinylique.

4. Matériau d'emballage selon l'une quelconque des revendications précédentes, dans lequel le second revêtement (6) comprend 1 à 5 couches de bioplastique.

5. Matériau d'emballage selon l'une quelconque des revendications précédentes, dans lequel le second revêtement (6) est thermoscellable dans la plage de températures allant de 130 à 180 °C.

6. Matériau d'emballage selon l'une quelconque des revendications précédentes, qui est biodégradable à au moins 90 % en 6 mois, mesuré selon la norme SFSEN 13432.

7. Matériau d'emballage selon l'une quelconque des revendications précédentes, dans lequel ledit au moins un biopolymère comprend une ou plusieurs matières premières renouvelables.

8. Matériau d'emballage selon l'une quelconque des revendications précédentes, dans lequel ledit au moins un biopolymère comprend une ou plusieurs matières premières synthétiques.

9. Matériau d'emballage selon l'une quelconque des revendications précédentes, dans lequel la teneur totale du premier revêtement (3) est de 6 à 14 gsm.

10. Emballage qui contient un matériau d'emballage selon l'une quelconque des revendications 1 à 9.

11. Emballage selon la revendication 10, dans lequel le premier revêtement (3) est placé en liaison avec la surface externe de l'emballage, et le second revêtement (6) est placé en liaison avec la surface interne de l'emballage.

12. Procédé permettant de fabriquer un matériau d'emballage, le matériau d'emballage étant thermoscellable et ayant un taux de transmission de vapeur d'eau de 1 à 30 g/m²/jour mesuré selon la norme ISO 2528:115 (en vigueur en 2011), dans des conditions d'humidité relative de 50 % et de température de 23 °C, le procédé comprenant
- la fourniture de papier (7) dans un système, le papier comprenant
- un papier de base (4) qui contient des fibres naturelles contenant de la cellulose, et
- un premier revêtement (3) qui contient un pigment lamellaire et un agent de liaison, dans lequel la proportion relative du ou des pigments lamellaires dans la teneur totale du ou des pigments lamellaires et de l'agent de liaison est d'au moins 40 % en poids et ne dépasse pas 80 % en poids, la teneur totale du premier revêtement dans le matériau d'emballage (2) étant de 1 à 14 gsm,
dans lequel le premier revêtement comprend un agent de liaison sélectionné parmi :
le latex d'acrylate, le latex de styrène-butadiène, le latex de styrène-acrylate et l'alcool polyvinylique, et
- le revêtement dudit papier (7) avec un revêtement (6) qui contient un biopolymère, dans lequel ledit revêtement (6) qui contient un biopolymère comprend au moins l'un parmi :
- l'acide polylactique,
- le biopolyester,
- un mélange de polylactide et de biopolyester,
- un mélange de polylactide, de biopolyester et de talc,
- l'amidon thermoplastique,
- le polyhydroxyalcanoate, et
- un mélange de polyhydroxybutyrate et de valérate, une teneur totale du revêtement étant de 5 à 50 gsm, pour la fabrication du matériau d'emballage (2), par technique d'extrusion, technique de coextrusion, technique de laminage par extrusion ou technique de laminage par coextrusion de sorte que ledit revêtement (6) qui contient un biopolymère et le premier revêtement (3) se trouvent sur différents côtés du papier de base,
dans lequel la seconde couche de revêtement est thermoscellable à une température comprise entre 140 et 180 °C, sous une pression de 3 bars.

13. Utilisation de matériau d'emballage selon l'une quelconque des revendications précédentes 1 à 9 en tant qu'emballage alimentaire ou partie de celui-ci.

14. Utilisation de matériau d'emballage selon l'une quelconque des revendications précédentes 1 à 9 en tant que matériau de sachet interne dans une boîte en carton ou une boîte en papier cartonné pour empêcher la migration d'huile minérale vers un produit emballé.
